# EUROPÄISCHE PATENTSCHRIFT

(11) **EP 1 940 665 B1**
(45) Veröffentlichungstag und Bekanntmachung des Hinweises auf die Patenterteilung: **17.06.2009**
(21) Anmeldenummer: 06793265.7
(22) Anmeldetag: 06.09.2006
(51) Int. Cl.: B60W 30/18, B60W 30/16, B60W 40/04

(54) **ABSTANDS- UND GESCHWINDIGKEITSREGLER MIT STAUERKENNUNG**
ADAPTIVE CRUISE CONTROL FEATURING RECOGNITION OF A TRAFFIC JAM
REGULATEUR DE DISTANCE ET DE VITESSE A DETECTION D'EMBOUTEILLAGE

(30) Priorität: 20.10.2005 DE 102005050277
(43) Veröffentlichungstag der Anmeldung: 09.07.2008
(73) Patentinhaber: ROBERT BOSCH GMBH, 70442 Stuttgart (DE)
(72) Erfinder: BOECKER, Juergen, 70176 Stuttgart (DE); HOETZER, Dieter, 48331 Farmington Hills (DE)
(86) Internationale Anmeldenummer: PCT/EP2006/066062
(87) Internationale Veröffentlichungsnummer: WO 2007/045523

(56) Entgegenhaltungen:
- EP-A1- 1 302 359
- EP-A2- 1 288 055
- DE-A1- 10 349 434
- DE-A1- 19 838 818
- DE-A1- 19 949 499
- DE-A1- 19 958 520
- DE-C1- 19 606 258

## Beschreibung

### Stand der Technik

Die Erfindung betrifft einen Abstands- und Geschwindigkeitsregler für Kraftfahrzeuge, mit einem Sensorsystem zur Ortung vorausfahrender Fahrzeuge und einem Regler, der auf der Grundlage vorgegebener Regelparameter die Geschwindigkeit des Fahrzeugs und/oder den Abstand zu einem vorausfahrenden Fahrzeug regelt.

Solche Abstands- und Geschwindigkeitsregler werden auch als ACC-Systeme (Adaptive Cruise Control) bezeichnet und weisen als Sensorsystem typischerweise einen Radarsensor auf, mit dem die Abstände und Relativgeschwindigkeiten vorausfahrender Fahrzeuge gemessen werden können. Auf diese Weise ist es möglich, ein unmittelbar vorausfahrendes Fahrzeug, das sogenannte Zielobjekt, in einem geeigneten Abstand oder, genauer, mit einer geeignet gewählten Zeitlücke zu verfolgen. Im Freifahrtmodus, wenn kein Zielobjekt vorhanden ist, erfolgt eine Regelung auf eine Sollgeschwindigkeit, die z. B. durch eine vom Fahrer gewählte Wunschgeschwindigkeit gegeben ist.

Beispiele für vorgegebene Regelparameter sind die Sollgeschwindigkeit sowie die "Dynamik", die z. B. durch die im Regelbetrieb zugelassenen Obergrenzen für den Betrag der Fahrzeugbeschleunigung und -verzögerung charakterisiert wird.

Die bisher im Einsatz befindlichen ACC-Systeme sind generell für Fahrten auf Autobahnen oder gut ausgebauten Landstraßen vorgesehen und lassen sich nur oberhalb einer bestimmten Mindestgeschwindigkeit von beispielsweise 30 km/h aktivieren.

Es sind jedoch ACC-Systeme mit einem erweiterten Funktionsumfang in Entwicklung, die beispielsweise die folgenden zusätzlichen Funktionen bieten: Folgefahrt bei sehr niedrigen Geschwindigkeiten (unterhalb von 30 km/h), Bremsen in den Stand, wenn das Vorderfahrzeug anhält, automatisches Halten des Fahrzeugs im Stand und gegebenenfalls automatisches Wiederanfahren, wenn der Verkehr es zuläßt. Dem Anfahrvorgang kann dann ggf. ein akustischer Anfahrhinweis für den Fahrer vorausgehen. Diese erweiterte Funktionalität wird häufig zusammenfassend als Stop & Go Funktion bezeichnet.

Zur Verbesserung des Verkehrsflusses sind Telematiksysteme bekannt, mit denen Verkehrsstaus im Streckennetz automatisch erkannt und an eine Verkehrszentrale gemeldet werden können. In DE 199 17 154, DE 101 26 872 und DE 196 06 258 werden in diesem Zusammenhang Stauerkennungssysteme beschrieben, die an Bord von Fahrzeugen einer sogenannten Stichprobenflotte installiert werden und in der Lage sind, anhand des Geschwindigkeitsprofils des eigenen Fahrzeugs eine Stausituation zu erkennen. Gemäß DE 196 06 258 wird zu diesem Zweck die Geschwindigkeit des Fahrzeugs fortlaufend erfaßt und nach vorgegebenen Geschwindigkeitsklassen klassifiziert. Das Klassifizierungsergebnis wird dann einem zeitlichen Integrationsprozeß unterzogen, und aus dem Integrationsergebnis wird mit Hilfe von Fuzzy-Logic ein Wahrscheinlichkeitswert für das Vorliegen einer Stausituation berechnet.

Aus der gattungsbildenden DE 103 49 434 ist ein Verfahren zur Verbesserung einer Abstands- und Folgeregelung eines Fahrzeugs bekannt, bei dem im Fall des aktiven ACC-Systems ein automatischer Eingriff in die Fahrzeugsteuerung erfolgt, um zu einem vorausfahrenden Fahrzeug einen eingestellten und/oder ermittelten Mindestabstand einzuhalten. Hierzu wird die Fahrzeuggeschwindigkeit und/oder Fahrzeugbeschleunigung ermittelt oder abgeschätzt und nach Maßgabe der ermittelten oder abgeschätzten Fahrzeuggeschwindigkeit und/oder Fahrzeugbeschleunigung wird ein Stop-and-Go Fahrmanöver erkannt und auf Grundlage des/der erkannten Stop-and-Go Fahrmanövers wird eine Verkehrsstausituation erkannt und der automatische Eingriff wird nach Maßgabe der erkannten Verkehrsstausituation beeinflusst oder modifiziert.

Aus der EP 1 288 055 ist ein ACC-System bekannt, bei dem infolge einer Deaktivierung der ACC-Funktion durch den Fahrer bei Wiederaufnahme der Funktion eine neue Setzgeschwindigkeit gewählt wird, wobei in Abhängigkeit der Fahrumgebung bei Wiederaktivierung die Setzgeschwindigkeit ausgewählt wird.

### Vorteile der Erfindung

Die Erfindung mit den in Anspruch 1 angegebenen Merkmalen ermöglicht es, im Rahmen der Abstands- und Geschwindigkeitsregelung eine Stausituation automatisch zu erkennen und dann die Regelparameter automatisch an die speziellen Bedingungen einer solchen Stausituation anzupassen.

Bekannte Regler mit Stop & Go Funktion sind häufig so gestaltet, daß nach einem Fahrzeugstillstand, zumindest dann, wenn dieser Stillstand eine gewisse Zeit gedauert hat, der Fahrer einen akustischen, optischen oder haptischen Anfahrhinweis erhält, bevor der automatische Anfahrvorgang (ggf. auch erst nach Quittierung durch den Fahrer) eingeleitet wird. In Stausituationen wird jedoch die häufige Ausgabe solcher Anfahrhinweise oft als störend empfunden. Erfindungsgemäß wird daher bei erkanntem Stau die Ausgabe des Anfahrhinweises vor Einleitung des automatischen Anfahrvorgangs unterdrückt wird.

Insbesondere ermöglicht es die Erfindung, im Staubetrieb eine Regelung auf der Grundlage einer reduzierten Dynamik durchzuführen, so daß Anfahr-, Beschleunigungs- und Bremsvorgänge im Staubetrieb mit einer reduzierten Dynamik erfolgen, was zu einer ruhigeren und kraftstoffsparenderen Fahrweise führt.

Wenn die Regelfunktionen nicht nur auf kreuzungsfreien Straßen, sondern auch auf Landstraßen oder im Stadtverkehr zur Verfügung stehen, sollte das System auch in der Lage sein, zwischen einer "echten" Stausituation und anderen Verkehrssituationen zu unterscheiden, in denen es ebenfalls vorübergehend zu einer Fahrt mit sehr niedriger Geschwindigkeit oder zu einem Anhalten kommen kann, etwa bei einem Halt vor einer roten Ampel. Während bei einem Stau eine geringe Dynamik vorteilhaft ist, sollte nämlich beim Anfahren in einer Ampelschlange im Gegenteil in eine Regelung mit einer hohen Dynamik erfolgen, damit während einer Grünphase eine möglichst hohe Anzahl von Fahrzeugen die Kreuzung passieren kann. Durch die automatische Stauerkennung läßt sich erfindungsgemäß in jeder Situation ein angepaßtes Systemverhalten erreichen.

Vorteilhafte Ausgestaltungen und Weiterbildungen der Erfindung ergeben sich aus den Unteransprüchen.

Bevorzugt beruht die Stauerkennung auf einer Auswertung der Ortungssignale des Sensorsystems, also beispielsweise des Radarsensors, in Kombination mit einer Analyse der in der jüngeren Vergangenheit gefahrenen Geschwindigkeit. Als kennzeichnend für einen Stau wird dabei angesehen, daß ein vorausfahrenden Fahrzeug verfolgt wird, der Radarsensor also ein Zielobjekt erfaßt hat, und daß die gefahrene Geschwindigkeit für längere Zeit innerhalb eines bestimmten Geschwindigkeitsbereiches mit niedriger Durchschnittsgeschwindigkeit bleibt.

In einer besonders bevorzugten Ausführungsform wird zur Berechnung einer Stauwahrscheinlichkeit die Differenz zwischen einer vorgegebenen Grenzgeschwindigkeit und der momentanen Fahrgeschwindigkeit über die Zeit integriert. Je länger die gefahrene Geschwindigkeit unterhalb der Grenzgeschwindigkeit bleibt, desto größer ist die Stauwahrscheinlichkeit. Wenn die Grenzgeschwindigkeit überschritten wird, so nimmt die Stauwahrscheinlichkeit nicht abrupt auf null ab, sondern sie sinkt nur allmählich, entsprechend der Abnahme des Zeitintegrals der Geschwindigkeitsdifferenz. Dadurch ist sichergestellt, daß ein kurzer "Zwischenspurt" wie er in Stausituationen gelegentlich auftritt, nicht fälschlich als eine Auflösung des Staus interpretiert wird.

Bevorzugt wird die Integration der Zeitdifferenz ausgesetzt, wenn die gefahrene Geschwindigkeit unter eine untere Grenzgeschwindigkeit abnimmt. Dadurch wird verhindert, daß ein zeitweiser Stillstand des Fahrzeugs, beispielsweise vor einer Ampel, zu einer immer weiteren Zunahme des Integrals führt und dann fälschlich als eine Stausituation interpretiert wird.

Bevorzugt wird die Integration auch dann ausgesetzt, wenn das Integral einen bestimmten Maximalwert erreicht hat. Dadurch wird verhindert, daß das Integral bei einem länger dauernden Stau extrem hohe Werte annimmt, was die unerwünschte Folge hätte, daß die Auflösung eines Staus erst verspätet erkannt würde, nämlich erst dann, wenn das Integral von dem sehr hohen Wert wieder auf einen niedrigen Wert abgenommen hat.

Um eine Stauerkennung im Sinne einer Ja/Nein-Aussage zu ermöglichen, kann die durch Integration ermittelte Stauwahrscheinlichkeit mit einem oberen und einem unteren Schwellenwert verglichen werden. Bei Überschreitung des oberen Schwellenwertes nimmt das Stausignal den Wert "ja" an, und bei Unterschreitung des unteren Schwellenwertes nimmt es wieder den Wert "nein" an. Der obere Schwellenwert kann dabei mit dem Maximalwert identisch sein, bei dem die Integration ausgesetzt wird. Außerdem nimmt das Steuersignal den Wert "nein" an und das Integral wird auf null zurückgesetzt, wenn der Radarsensor kein vorausfahrendes Fahrzeug mehr ortet.

Ein angemessener Wert für die obere Grenzgeschwindigkeit, die zur Berechnung des Integrals benötigt wird, kann vorab empirisch ermittelt werden. Vorzugsweise ist dieser Wert vom erkannten Straßentyp abhängig, so daß er beispielsweise auf Autobahnen höher ist als im Stadtverkehr. Zur Erkennung des Straßentyps ist dabei eine Anbindung des Abstands- und Geschwindigkeitsreglers an ein ggf. im Fahrzeug vorhandenes Navigationssystem zweckmäßig.

Ebenso kann die Höhe der oberen Grenzgeschwindigkeit auch von der Anzahl der Fahrspuren abhängig sein sowie davon, auf welcher Fahrspur sich das eigene Fahrzeug befindet. Beispielsweise könnte die obere Grenzgeschwindigkeit auf der linken Fahrspur höher sein als auf der rechten Spur.

Die untere Grenzgeschwindigkeit kann ebenfalls vom Straßentyp und/oder der Fahrspur abhängig sein und kann beispielsweise als ein bestimmter Prozentsatz der oberen Grenzgeschwindigkeit definiert sein. Der Straßentyp und/oder die Fahrspur können alternativ oder zusätzlich auch in die Bestimmung der Schwellenwerte einfließen, mit denen das Integral verglichen wird.

Bei einem erkannten Stau erfolgt bevorzugt eine Anpassung der Regelparameter, die die Anfahr- und/oder Bremsdynamik des Fahrzeugs bestimmen, so daß in Stausituationen mehr Gewicht auf Komfort als auf Dynamik gelegt wird, während andererseits z.B. in einer Anfahrsituation vor einer Ampel mehr Gewicht auf eine höhere Dynamik gelegt wird.

Vor einer Ampelanlage können die Grenzen zwischen einer Anfahrsituation und einem Stau fließend sein, beispielsweise dann, wenn die Schlange der Fahrzeuge vor der Ampel so lang ist, daß die Ampelkreuzung erst nach mehreren Grünphasen passiert werden kann. Typischerweise werden in einer solchen Situation die Unterschiede zwischen den Rot- und Grünphasen mit zunehmendem Abstand zur Ampelanlage mehr und mehr verwischt, d.h., am Ende der Schlange herrscht eine stauähnliche Situation mit stockendem Verkehr vor, während mit zunehmender Annäherung an die Ampelkreuzung ein immer deutlicherer Wechsel zwischen Stillstandsphasen und Phasen mit relativ hoher Geschwindigkeit zu verzeichnen ist. Bei geeigneter Wahl der Grenzgeschwindigkeit wird sich das System so verhalten, daß bei Annäherung an die Ampelkreuzung automatisch ein Umschalten von Staubetrieb auf für eine Anfahrsituation vor einer Ampel angemessene höhere Dynamik erfolgt.

Gemäß einer Weiterbildung der Erfindung ist es auch denkbar, daß bei erkanntem Stau die Sollgeschwindigkeit, die der vom Fahrer vor dem Auffahren auf das Stauende gewählten Wunschgeschwindigkeit entspricht, auf einen niedrigeren Wert reduziert wird, so daß das Fahrzeug, zumindest nach einer längeren Stauperiode, nicht selbstständig wieder auf die zuvor eingestellte Geschwindigkeit beschleunigt, sondern zunächst auf eine erneute Bestätigung (Erhöhung der Wunschgeschwindigkeit) durch den Fahrer wartet.

Schließlich kann die erfindungsgemäß vorgesehene Einrichtung zur Stauerkennung auch für andere Fahrzeugsysteme nutzbar gemacht werden, beispielsweise zum automatischen Absenden einer Staumeldung an eine Verkehrszentrale, für einen Befehl an das Navigationssystem, eine Umfahrungsroute zu berechnen, oder für einen Befehl an die elektronische Steuerung des Automatikgetriebes, um das Schaltprogramm des Getriebes an die Stausituation anzupassen.

### Zeichnung

Ein Ausführungsbeispiel der Erfindung ist in der Zeichnung dargestellt und in der nachfolgenden Beschreibung näher erläutert.

Es zeigen:
- Figur 1: ein Blockdiagramm eines Abstands- und Geschwindigkeitsreglers; und
- Figur 2: ein Zeitdiagramm verschiedener Signale in einer Einrichtung zur Stauerkennung.

### Beschreibung des Ausführungsbeispiels

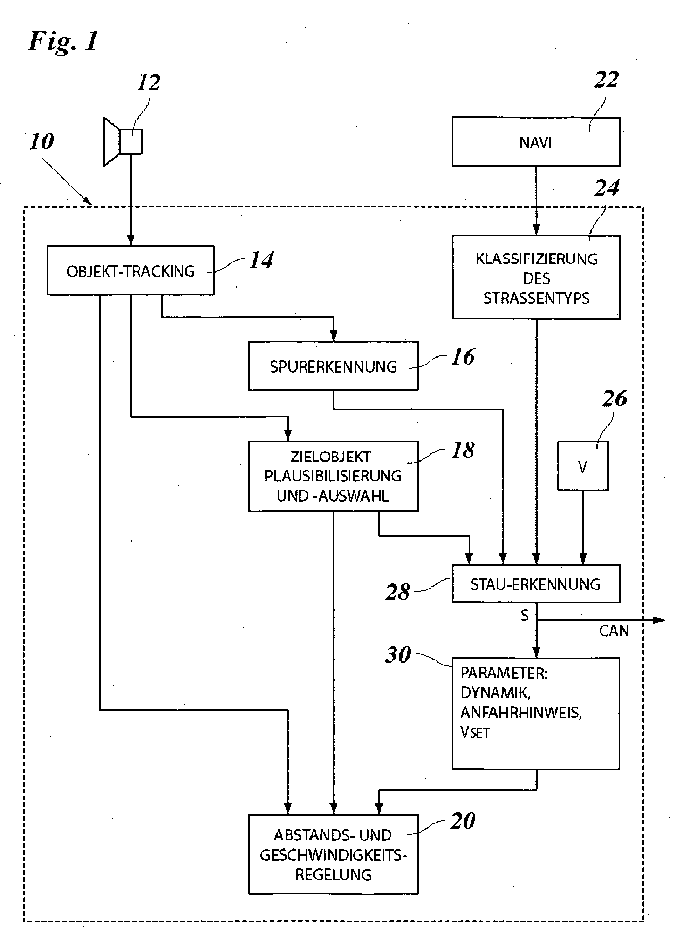

In Figur 1 ist ein ACC-System 10 mit Stop & Go Funktion dargestellt, dessen grundsätzlicher Aufbau und Wirkungsweise als bekannt vorausgesetzt werden können und deshalb hier nur kurz skizziert werden.

Ein vom im Fahrzeug eingebauter winkelauflösender Radarsensor 12 liefert Ortungsdaten (Abstände, Relativgeschwindigkeiten und Azimutwinkel) der georteten Objekte an das ACC-System 10. Die Meßdaten werden zyklisch aktualisiert. In einem Tracking-Modul 14 werden jeweils die aktuellen Meßdaten mit den Meßdaten aus vorangegangene Meßzyklen abgeglichen, so daß die Bewegungen der einzelnen Objekte verfolgt werden können.

Ein (nicht gezeigtes) Kursprädiktionsmodul dient zur Abschätzung des voraussichtlichen Kurses des eigenen Fahrzeugs, z. B. anhand der Fahrbahnkrümmung in dem gerade durchfahrenen Fahrbahnabschnitt. Anhand des prädizierten Kurses wird dann ein Fahrschlauch bestimmt, innerhalb dessen sich diejenigen Fahrzeuge befinden müssen, die als Zielobjekt für die Abstandsregelung in Frage kommen.

Da jedoch das Tracking-Modul 14 auch in der Lage ist, überholte oder überholende Fahrzeuge auf Nebenspuren zu erkennen, läßt sich in einem Spurerkennungsmodul 16 auch Information darüber gewinnen, wie viele Fahrspuren die derzeit befahrene Richtungsfahrbahn aufweist und auf welcher dieser Spuren sich das eigene Fahrzeug befindet.

In einem Plausibilisierungsmodul 18 werden die georteten und im Tracking-Modul 14 verfolgten Objekte plausibilisiert, d. h., für jedes Objekt wird eine Wahrscheinlichkeit dafür angegeben, daß es sich innerhalb des Fahrschlauches befindet. Dabei wird berücksichtigt, daß die Ortungsdaten, insbesondere die Querpositionsdaten, gewisse Fehlertoleranzen aufweisen, die mit zunehmendem Objektabstand größer werden. Wenn die Wahrscheinlichkeit dafür, daß sich das Objekt innerhalb des Fahrschlauches befindet, oberhalb eines bestimmten Schwellenwertes liegt, wird das Objekt "plausibilisiert", d. h., es wird als ein relevantes Objekt behandelt, das sich auf der eigenen Fahrspur befindet. Unter den so plausibilisierten Objekten wird dann schließlich dasjenige mit dem kleinsten Abstand als Zielobjekt für die Abstandsregelung ausgewählt.

In einem Regler 20 erfolgt anhand der Ortungsdaten des Zielobjekts die eigentliche Abstandsregelung durch Eingriff in das Antriebssystem und erforderlichenfalls auch das Bremssystem des Fahrzeugs, so daß das Zielobjekt mit einer vom Fahrer innerhalb gewisser Grenzen wählbaren Zeitlücke verfolgt wird. Ist kein Zielobjekt vorhanden, so befindet sich das System im Freifahrtmodus, und es erfolgt eine Regelung auf eine vom Fahrer gewählte Wunschgeschwindigkeit.

Das hier beschriebene ACC-System 10 weist eine Schnittstelle zu einem Navigationssystem 22 des Fahrzeugs auf. Dieses Navigationssystem enthält eine in digitaler Form gespeicherte Straßenkarte und ermittelt mit Hilfe eines GPS-Systems (Global Positioning System) die aktuelle Position des eigenen Fahrzeugs, so daß in einem Klassifizierungsmodul 24 des ACC-Systems auch Informationen über den Straßentyp (Autobahn oder Landstraße) sowie über bevorstehende Ausfahrten, Kreuzungen, Einmündungen, und dergleichen zur Verfügung stehen. Darüber hinaus läßt sich anhand der vom Navigationssystem gelieferten Daten auch entscheiden, in welchem Staatsgebiet sich das Fahrzeug befindet und ob es sich bei dem voraus liegenden Fahrbahnabschnitt um eine Landstraße außerhalb geschlossener Ortschaften oder um eine innerörtliche Straße handelt, so daß auch Information über die jeweils geltenden gesetzlichen Geschwindigkeitsbeschränlungen bereitgestellt werden kann.

Die Daten des Klassifizierungsmoduls 24 und des Spurerkennungsmoduls 16 werden zusammen mit der von einem Geschwindigkeitssensor 26 gemessenen aktuellen Fahrgeschwindigkeit V des Fahrzeugs einer Stauerkennungseinrichtung 28 zugeführt. Außerdem erhält die Stauerkennungseinrichtung 28 vom Plausibilisierungsmodul 18 die Information, ob ein Zielobjekt ausgewählt ist und verfolgt wird.

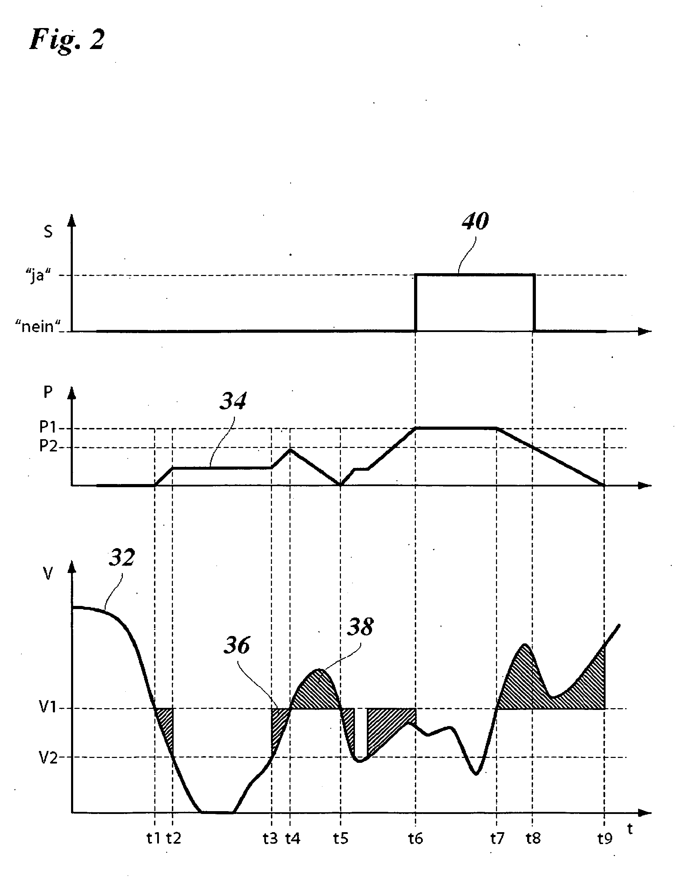

Anhand dieser Informationen entscheidet die Stauerkennungseinrichtung 28 mit Hilfe eines Algorithmus, der weiter unter im Zusammenhang mit Figur 2 näher erläutert werden wird, ob sich das eigene Fahrzeug in einer Stausituation befindet oder nicht. Dementsprechend übermittelt die Stauerkennungseinrichtung 28 ein logisches Stausignal S, das entweder den Wert "ja" oder "nein" annimmt, an eine Vorgabeeinrichtung 30, die eine Anzahl von Regelparametern für den Regler 20 vorgibt.

Diese Regelparameter umfassen zum einen eine Anzahl von Dynamikparametern, die z.B. festlegen, wie stark das eigene Fahrzeug maximal beschleunigt oder verzögert werden kann, um den Abstand zum Zielobjekt zu halten, und welcher Beschleunigungsverlauf für das automatische Anfahren aus dem Stand gelten soll. Bei einem erkannten Stau werden diese Parameter generell im Sinne einer geringeren Dynamik verändert, d.h., es werden nur dem Betrage nach kleinere Beschleunigungen und Verzögerungen zugelassen, so daß im Staubetrieb eine komfortablere und kraftstoffsparendere Fahrweise erreicht wird. Wahlweise kann auch ein Parameter variiert werden, der bestimmt, bei welchem Abstand und oder welcher Geschwindigkeit des Vorderfahrzeugs ein automatischer Anfahrvorgang eingeleitet wird.

Ein weiterer Parameter betrifft die Ausgabe von akustischen, optischen oder haptischen Anfahrhinweisen an den Fahrer vor der Einleitung eines automatischen Anfahrvorgangs. Beispielsweise kann im "normalen" Stop & Go Betrieb, wenn kein Stau vorliegt, vorgesehen sein, daß ein Anfahrhinweis ausgegeben wird, wenn die Stillstandszeit des Fahrzeugs einen bestimmten Wert von beispielsweise einigen Sekunden überschritten hat. Wenn die Stauerkennungseinrichtung 28 jedoch eine Stausituation erkannt hat, werden diese Anfahrhinweise vollständig unterdrückt, damit der Fahrer sich nicht durch das häufige Auftreten solcher Hinweise gestört fühlt.

Ein weiterer Parameter ist im gezeigten Beispiel die Sollgeschwindigkeit VSET, auf die der Regler 20 im Freifahrtmodus regelt. Normalerweise entspricht diese Sollgeschwindigkeit der vom Fahrer gewählten Wunschgeschwindigkeit. Wenn jedoch ein Stau erkannt wurde und die Stausituation eine gewisse Zeit angehalten hat, besteht die Gefahr, daß der Fahrer vergessen hat, daß noch eine relativ hohe Wunschgeschwindigkeit gespeichert ist, und der Fahrer könnte bei Auflösung des Staus durch die automatische Beschleunigung auf diese hohe Wunschgeschwindigkeit überrascht werden. Deshalb ist es zweckmäßig, unter diesen Bedingungen die Sollgeschwindigkeit auf einen bestimmten Wert, auf Autobahnen beispielsweise auf 60 oder 80 km/h zu reduzieren, so daß der Fahrer, wenn er schneller fahren möchte, durch Gaspedal- und/oder Schalterbetätigung aktiv eine neue Wunschgeschwindigkeit eingeben muß.

Das von der Erkennungseinrichtung 28 ausgegebene Stausignal wird schließlich über einen fahrzeugeigenen CAN-Bus auch anderen Systemkomponenten des Fahrzeugs zur Verfügung gestellt, beispielsweise der (nicht gezeigten) Getriebesteuerung oder dem Navigationssystem 22 zur Berechnung einer Route zur Umfahrung des Staus.

Die Arbeitsweise der Stauerkennungseinrichtung 28 wird nun anhand des in Figur 2 gezeigten Diagramms näher erläutert.

Solange das Plausibilisierungsmodul 18 meldet, daß ein Zielobjekt vorhanden ist, wird in der Stauerkennungseinrichtung 28 kontinuierlich die vom Geschwindigkeitssensor 26 gemeldete Geschwindigkeit V des Fahrzeugs ausgewertet. Die Kurve 32 in Figur 2 zeigt einen typischen zeitlichen Verlauf der Geschwindigkeit V vor, während und nach einem Stau.

Die gemessene Geschwindigkeit V wird mit einer oberen Grenzgeschwindigkeit V1 verglichen. Diese Grenzgeschwindigkeit V1 kann beispielsweise generell 40 km/h betragen, oder sie kann abhängig vom Straßentyp und von der befahrenen Fahrspur variieren. Beispielsweise kann sie auf der linken oder mittleren Spur einer Autobahn 60 km/h, auf der rechten Spur einer Autobahn und auf Landstraßen 40 km/h und innerorts (bei einer generellen Geschwindigkeitsbeschränkung auf 50 km/h) nur 30 km/h betragen.

Vor dem Zeitpunkt t1 in Figur 2 liegt V oberhalb von V1, und nichts deutet auf einen Stau hin. Sobald V jedoch unter V1 sinkt, wird die Differenz V1 - V über die Zeit integriert. Der zeitliche Verlauf des so erhaltenen Integrals P wird in Figur 2 durch die Kurve 34 dargestellt. Wenn zum Zeitpunkt t2 die Geschwindigkeit V unter eine untere Grenzgeschwindigkeit V2 sinkt, die beispielsweise 50% von V1 beträgt, wird die Integration ausgesetzt, und der erreichte Wert des Integrals P wird gehalten. Nimmt die Geschwindigkeit V wieder über V2 zu, im gezeigten Beispiel bei t3, so wird die Integration fortgesetzt. Die positiven Beiträge zu dem Integral P sind in Figur 2 auch als aufsteigend schraffierte Flächen 36 dargestellt, die durch die Kurve 32 und die Gerade V = V1 begrenzt werden.

Wenn zum Zeitpunkt t4 die Geschwindigkeit V wieder über V1 ansteigt, so wird der Integrand negativ, und das Integral P nimmt wieder ab. Der entsprechende negative Beitrag zum Integral P wird durch fallend schraffierte Flächen 38 dargestellt.

Das Integral P kann als eine Stauwahrscheinlichkeit interpretiert werden. Solange diese Stauwahrscheinlichkeit unterhalb eines oberen Schwellenwertes P1. liegt, hat das von der Stauerkennungseinrichtung 28 ausgegebene logische Stausignal S, in Figur 2 repräsentiert durch die Kurve 40, den Wert "nein".

Im gezeigten Beispiel hat die Geschwindigkeit V im Intervall zwischen t2 und t3 zeitweise den Wert 0, d.h., das Fahrzeug hat gestanden, beispielsweise vor einer roten Ampel. Da jedoch die Integration unterhalb von V2 ausgesetzt wird, führt dies nicht zu einer Zunahme des Integrals P, und die Stauwahrscheinlichkeit bleibt kleiner als P1. Somit wird also das Warten in einer Ampelschlange nicht fälschlich als Stau interpretiert.

Im gezeigten Beispiel wird angenommen, daß das Fahrzeug im Zeitintervall.zwischen t4 und t5 auf ein Stauende auffährt, so daß der Regler 20 eine Verzögerung des Fahrzeugs veranlaßt. Zum Zeitpunkt t5 sinkt V wieder unter V1, und der Integrand wird wieder positiv.

Für eine Stausituation ist charakteristisch, daß die Geschwindigkeit V längere Zeit unter V1 bleibt, so daß das Integral P schließlich, zur Zeit t6, den oberen Schwellenwert P1 erreicht. Dieser Schwellenwert P1 ist so gewählt, daß er nicht erreicht wird, wenn das Fahrzeug nur einmal vor einer roten Ampel anhält und dabei kurzzeitig (in der Verzögerungsphase zwischen t1 und t2 und in der Anfahrphase zwischen t3 und t4) den Geschwindigkeitsbereich zwischen V1 und V2 passiert. Erst bei längerer Fahrt mit einer Geschwindigkeit unterhalb von V1 wird der Schwellenwert P1 erreicht, und das Stausignal S wechselt in den Zustand "ja". Vom Zeitpunkt t6 an werden somit durch die Vorgabeeinrichtung 30 die Regelparameter an den Staubetrieb angepaßt. Außerdem wird von diesem Zeitpunkt an die Integration wieder ausgesetzt, so daß das Integral P nicht über den oberen Schwellenwert P1 hinaus anwächst.

Wenn sich der Stau wieder auflöst, nimmt die Geschwindigkeit V wieder zu und sie überschreitet bei t7 die obere Grenzgeschwindigkeit V1. In diesem Augenblick wird die Integration wieder fortgesetzt, doch ist der Integrand nun negativ, so daß die Stauwahrscheinlichkeit P abnimmt. Sollte die Geschwindigkeit V nun wieder unter V1 sinken (in der Zeichnung nicht dargestellt), so würde der Integrand wieder positiv, und das Signal würde wieder bis auf maximal P1 anwachsen. Im gezeigten Beispiel bleibt die Geschwindigkeit V jedoch größer als V1, und das Integral P unterschreitet zum Zeitpunkt t8 einen niedrigeren Schwellenwert P2. Dies bewirkt, daß das Stausignal S wieder in den Zustand "nein" wechselt, d.h., das System hat die Auflösung des Staus erkannt, und die Regelparameter werden wieder auf die Normalwerte zurückgesetzt.

Die Integration wird jedoch auch nach dem Zeitpunkt t8 fortgesetzt, bis schließlich zum Zeitpunkt t9 das Integral P auf 0 abgenommen hat. Erst dann wird die Integration beendet, so daß der vor dem Zeitpunkt t1 geltende Zustand wieder hergestellt ist.

Würde jedoch in dem Zeitintervall t8 und t9 die Geschwindigkeit V wieder unter V1 sinken, so würde das Integral P umgehend von dem in diesem Zeitpunkt erreichten Wert aus wieder ansteigen, so daß der obere Schwellenwert P1 entspechend schneller erreicht würde. Insoweit bleibt zwischen den Zeitpunkten t8 und t9 noch eine gewisse "Erinnerung" an das vorausgegangene Staugeschehen erhalten.

Gemäß einer (nicht gezeigten) Abwandlung ist es denkbar, das Integral P auf 0 zurückzusetzen (womit auch S wieder den Wert "nein" annimmt), sobald die Geschwindigkeit V einen Geschwindigkeitswert V3 übersteigt, der deutlich größer ist als V1.

Während weiterhin in dem oben beschriebenen Ausführungsbeispiel davon ausgegangen wurde, daß das Integral P durch Integration der Geschwindigkeitsdifferenz V1 - V gebildet wird, ist es in einer alternativen Ausführungsform auch möglich, einfach die Zeit zu zählen, innerhalb derer die Geschwindigkeit V oberhalb von V1 bzw. zwischen V1 und V2 liegt. Der Integrand wäre dann: sgn(V1-V), wobei sgn die Signum-Funktion ist, die bei positivem Argument den Wert +1 und bei negativem Argument den Wert -1 hat.

## Patentansprüche

1. Abstands- und Geschwindigkeitsregler für Kraftfahrzeuge, mit einem Sensorsystem (12) zur Ortung vorausfahrender Fahrzeuge und einem Regler (20), der auf der Grundlage vorgegebener Regelparameter die Geschwindigkeit des Fahrzeugs und/oder den Abstand zu einem vorausfahrenden Fahrzeug regelt, wobei eine Stauerkennungseinrichtung (28) und eine Vorgabeeinrichtung (30) zur Anpassung der Regelparameter an eine erkannte Stausituation vorgesehen sind, **dadurch gekennzeichnet, daß** mindestens einer der Regelparameter ein Parameter ist, der bestimmt, ob vor einem durch den Regler (20) automatisch eingeleiteten Anfahrvorgang ein Anfahrhinweis an den Fahrer ausgegeben wird, und daß die Vorgabeeinrichtung (30) dazu ausgebildet ist, in einer Stausituation die Ausgabe des Anfahrhinweises zu sperren.

2. Abstands- und Geschwindigkeitsregler nach Anspruch 1, **dadurch gekennzeichnet, daß** mindestens einer der Regelparameter ein Dynamik-Parameter ist, der das durch den Regler (20) bestimmte Beschleunigungs- und/oder Verzögerungsverhalten des Fahrzeugs kennzeichnet.

3. Abstands- und Geschwindigkeitsregler nach einem der vorstehenden Ansprüche, **dadurch gekennzeichnet, daß** mindestens einer der Regelparameter eine Sollgeschwindigkeit (VSET) für die Geschwindigkeitsregelung in Abwesenheit eines vorausfahrenden Fahrzeugs ist und daß die Vorgabeeinrichtung (30) dazu ausgebildet ist, nach Erkennung einer Stausituation oder zumindest dann, wenn die Stausituation eine gewisse Zeit angedauert hat, die Sollgeschwindigkeit (VS ET) von einer vom Fahrer gewählten Wunschgeschwindigkeit auf eine kleinere Geschwindigkeit zu reduzieren.

4. Abstands- und Geschwindigkeitsregler nach einem der vorstehenden Ansprüche, **dadurch gekennzeichnet, daß** die Stauerkennungseinrichtung (30) einen Ausgang (CAN) hat, über den ein Stausignal (S) auch an andere Systemkomponenten des Fahrzeugs ausgebbar ist.

5. Abstands- und Geschwindigkeitsregler nach einem der vorstehenden Ansprüche, **dadurch gekennzeichnet, daß** die Stauerkennungseinrichtung (28) dazu ausgebildet ist, zu entscheiden, daß kein Stau vorliegt, wenn das Sensorsystem (12) kein vorausfahrendes Fahrzeug ortet, das als Zielobjekt verfolgt wird.

6. Abstands- und Geschwindigkeitsregler nach Anspruch 5, **dadurch gekennzeichnet, daß** die Stauerkennungseinrichtung (28) dazu ausgebildet ist, eine Stauwahrscheinlichkeit (P) durch zeitliche Integration mit einem positiven Integranden zu berechnen, wenn die Geschwindigkeit (V) des Fahrzeugs unterhalb einer vorgegebenen oberen Grenzgeschwindigkeit (V1) liegt, und mit einem negativen Integranden, wenn die Geschwindigkeit (V) des Fahrzeugs oberhalb der vorgegebenen oberen Grenzgeschwindigkeit (V1) liegt.

7. Abstands- und Geschwindigkeitsregler nach Anspruch 6, **dadurch gekennzeichnet, daß** die Stauerkennungseinrichtung (28) dazu ausgebildet ist, die Integration auszusetzen, wenn die Geschwindigkeit (V) des Fahrzeugs unterhalb einer vorgegebenen unteren Grenzgeschwindigkeit (V2) liegt, die kleiner ist als die obere Grenzgeschwindigkeit (V1).

8. Abstands- und Geschwindigkeitsregler nach Anspruch 6 oder 7, **dadurch gekennzeichnet, daß** die Stauerkennungseinrichtung (28) dazu ausgebildet ist, die Stauwahrscheinlichkeit (P) auf einen vorgegebenen Maximalwert (P1) zu begrenzen.

9. Abstands- und Geschwindigkeitsregler nach einem der Ansprüche 6 bis 8, **dadurch gekennzeichnet, daß** die Stauerkennungseinrichtung (28) dazu ausgebildet ist, die Integration auszusetzen, solange die Stauwahrscheinlichkeit (P) mindestens gleich einem oberen Schwellenwert (P1) ist.

10. Abstands- und Geschwindigkeitsregler nach einem der Ansprüche 6 bis 9, **dadurch gekennzeichnet, daß** die Stauerkennungseinrichtung (28) dazu ausgebildet ist, ein Stausignal (S) auszugeben, wenn die Stauwahrscheinlichkeit (P) einen oberen Schwellenwert (P1) erreicht, und das Stausignal (S) zurückzusetzen, wenn die Stauwahrscheinlichkeit (P) einen unteren Schwellwert (P2) unterschreitet.

11. Abstands- und Geschwindigkeitsregler nach einem der Ansprüche 6 bis 10, **dadurch gekennzeichnet, daß** eine Einrichtung (24) zur Klassifierung der vom dem Fahrzeug befahrenen Straße oder Fahrbahn vorgesehen ist und daß die Stauerkennungseinrichtung (28) dazu ausgebildet ist, mindestens eine der oberen und unteren Grenzgeschwindigkeiten (V1, V2) und/oder mindestens einen der oberen und unteren Schwellenwerte (P1, P2) abhängig vom Straßen- oder Fahrbahntyp zu variieren.

## Claims

1. Adaptive cruise controller for motor vehicles, having a sensor system (12) for locating vehicles travelling ahead, and a controller (20) which adjusts the velocity of the vehicle and/or the distance from a vehicle travelling ahead on the basis of predefined control parameters, wherein a traffic jam detection device (28) and a predefinition device (30) for adapting the control parameters to a detected traffic jam situation are provided, **characterized in that** at least one of the control parameters is a parameter which determines whether a starting instruction to the driver is output before a starting process which is initiated automatically by the controller (20), and **in that** the predefinition device (30) is designed to block the outputting of the starting instruction in a traffic jam situation.

2. Adaptive cruise controller according to Claim 1, **characterized in that** at least one of the control parameters is a dynamic parameter which characterizes the acceleration and/or deceleration behaviour of the vehicle which is determined by the controller (20).

3. Adaptive cruise controller according to one of the preceding claims, **characterized in that** at least one of the control parameters is a setpoint velocity (VSET) for the velocity control in the absence of a vehicle travelling ahead, and **in that** the predefinition device (30) is designed to reduce the setpoint velocity (VSET) from a desired velocity selected by the driver to a lower velocity, after a traffic jam situation has been detected or at least when the traffic jam situation has lasted for a specific time.

4. Adaptive cruise controller according to one of the preceding claims, **characterized in that** the traffic jam detection device (28) has an output (CAN) via which a traffic jam signal (S) can also be output to other system components of the vehicle.

5. Adaptive cruise controller according to one of the preceding claims, **characterized in that** the traffic jam detection device (28) is designed to decide that a traffic jam is not present if the sensor system (12) does not locate a vehicle which is travelling ahead and is tracked as a target object.

6. Adaptive cruise controller according to Claim 5, **characterized in that** the traffic jam detection device (28) is designed to calculate a probability (P) of a traffic jam by integration over time with a positive integrand if the velocity (V) of the vehicle is below a predefined upper limiting velocity (V1), and with a negative integrand if the velocity. (V) of the vehicle is above the predefined upper limiting velocity (V1).

7. Adaptive cruise controller according to Claim 6, **characterized in that** the traffic jam detection device (28) is designed to omit the integration if the velocity (V) of the vehicle is below a predefined lower limiting velocity (V2) which is lower than the upper limiting velocity (V1).

8. Adaptive cruise controller according to Claim 6 or 7, **characterized in that** the traffic jam detection device (28) is designed to limit the probability (P) of a traffic jam to a predefined maximum value (P1).

9. Adaptive cruise controller according to one of the preceding Claims 6 to 8, **characterized in that** the traffic jam detection device (28) is designed to omit the integration as long as the probability (P) of a traffic jam is at least equal to an upper threshold value (P1).

10. Adaptive cruise controller according to one of Claims 6 to 9, **characterized in that** the traffic jam detection device (28) is designed to output a traffic jam signal (S) if the probability (P) of a traffic jam reaches an upper threshold value (P1), and to remove the traffic jam signal (S) if the probability (P) of a traffic jam drops below a lower threshold value (P2).

11. Adaptive cruise controller according to one of Claims 6 to 10, **characterized in that** a device (24) for classifying the road or carriageway on which the vehicle is travelling is provided, and **in that** the traffic jam detection device (28) is designed to vary at least one of the upper and lower limiting velocities (V1, V2) and/or at least one of the upper and lower threshold values (P1, P2) as a function of the type of road or carriageway.

## Revendications

1. Régulateur de distance et de vitesse pour véhicules automobiles, comprenant un système de détection (12) pour localiser les véhicules qui précèdent et un régulateur (20) qui régule la vitesse du véhicule et/ou la distance par rapport à un véhicule qui précède en se basant sur des paramètres de régulation prédéfinis, un dispositif de détection d'encombrement (28) et un dispositif d'instruction (30) destiné à adapter les paramètres de régulation en fonction de la situation d'encombrement étant prévus, **caractérisé en ce qu'**au moins l'un des paramètres de régulation est un paramètre qui détermine si une notification de démarrage est délivrée à l'attention du conducteur avant une opération de démarrage initiée automatiquement par le régulateur (20) et que le dispositif d'instruction (30) est configuré pour bloquer l'émission de la notification de démarrage dans une situation d'encombrement.

2. Régulateur de distance et de vitesse selon la revendication 1, **caractérisé en ce qu'**au moins l'un des paramètres de régulation est un paramètre dynamique qui caractérise le comportement d'accélération et/ou de ralentissement déterminé par le régulateur (20).

3. Régulateur de distance et de vitesse selon l'une des revendications précédentes, **caractérisé en ce qu'**au moins l'un des paramètres de régulation est une vitesse de consigne (VSET) pour la régulation de vitesse en l'absence d'un véhicule qui précède et que le dispositif d'instruction (30) est configuré pour réduire la vitesse de consigne (VSET) d'une vitesse souhaitée choisie par le conducteur à une vitesse plus faible après avoir détecté une situation d'encombrement ou au moins lorsque la situation d'encombrement a persisté pendant un certain temps.

4. Régulateur de distance et de vitesse selon l'une des revendications précédentes, **caractérisé en ce que** le dispositif de détection d'encombrement (28) comporte une sortie (CAN) par le biais de laquelle un signal d'encombrement (S) peut également être délivré à d'autres composants du système du véhicule.

5. Régulateur de distance et de vitesse selon l'une des revendications précédentes, **caractérisé en ce que** le dispositif de détection d'encombrement (28) est configuré pour décider qu'il existe un encombrement lorsque le système de détection (12) ne localise aucun véhicule qui précède qui est suivi en tant qu'objet ciblé.

6. Régulateur de distance et de vitesse selon la revendication 5, **caractérisé en ce que** le dispositif de détection d'encombrement (28) est configuré pour calculer une probabilité d'encombrement (P) par intégration dans le temps avec une intégrande positive lorsque la vitesse (V) du véhicule est inférieure à une vitesse limite haute prédéfinie (V1) et avec une intégrande négative lorsque la vitesse (V) du véhicule est supérieure à la vitesse limite haute prédéfinie (V1).

7. Régulateur de distance et de vitesse selon la revendication 6, **caractérisé en ce que** le dispositif de détection d'encombrement (28) est configuré pour abandonner l'intégration lorsque la vitesse (V) du véhicule est inférieure à une vitesse limite basse prédéfinie (V2), laquelle est inférieure à la vitesse limite haute (V1).

8. Régulateur de distance et de vitesse selon la revendication 6 ou 7, **caractérisé en ce que** le dispositif de détection d'encombrement (28) est configuré pour limiter la probabilité d'encombrement (P) à une valeur maximale prédéfinie (P1).

9. Régulateur de distance et de vitesse selon l'une des revendications 6 à 8, **caractérisé en ce que** le dispositif de détection d'encombrement (28) est configuré pour abandonner l'intégration tant que la probabilité d'encombrement (P) est au moins égale à une valeur de seuil haute (P1).

10. Régulateur de distance et de vitesse selon l'une des revendications 6 à 9, **caractérisé en ce que** le dispositif de détection d'encombrement (28) est configuré pour délivrer un signal d'encombrement (S) lorsque la probabilité d'encombrement (P) atteint une valeur de seuil haute (P1) et pour réinitialiser le signal d'encombrement (S) lorsque la probabilité d'encombrement (P) devient inférieure à une valeur de seuil basse (P2).

11. Régulateur de distance et de vitesse selon l'une des revendications 6 à 10, **caractérisé en ce qu'**il est prévu un dispositif (24) pour classifier la route ou la voie sur laquelle roule le véhicule et que le dispositif de détection d'encombrement (28) est configuré pour faire varier au moins l'une des vitesses limites haute et basse (V1, V2) et/ou au moins l'une des valeurs de seuil haute et basse (P1, P2) en fonction du type de route ou de voie.
